# EUROPEAN PATENT SPECIFICATION

(11) **EP 2 241 453 B1**
(45) Date of publication and mention of the grant of the patent: **28.03.2012**
(21) Application number: 10006712.3
(22) Date of filing: 22.05.2007
(51) Int. Cl.: B60B 3/16, B60B 27/00

(54) **Rolling bearing device for wheels**
Kugellagervorrichtung für Räder
Dispositif de roulement pour roues

(30) Priority: 22.05.2006 JP 2006141121; 31.08.2006 JP 2006235613; 31.08.2006 JP 2006235610; 25.09.2006 JP 2006258649; 25.09.2006 JP 2006259346
(43) Date of publication of application: 20.10.2010
(62) Divisional of application: 07010169.6
(73) Proprietor: JTEKT Corporation, Osaka-shi Osaka 542-8502 (JP)
(72) Inventor: Mori, Tatsuki c/o JTEKT Corporation, Osaka-shi Osaka 542-8502 (JP); Matsui, Shunichi c/o JTEKT Corporation, Osaka-shi Osaka 542-8502 (JP); Yokota, Tatsuya c/o JTEKT Corporation, Osaka-shi Osaka 542-8502 (JP); Yano, Hiroshi c/o JTEKT Corporation, Osaka-shi Osaka 542-8502 (JP); Shitsukawa, Kenji c/o JTEKT Corporation, Osaka-shi Osaka 542-8502 (JP); Matsuo, Yoshiomi c/o JTEKT Corporation, Osaka-shi Osaka 542-8502 (JP)
(74) Representative: Weber, Joachim

(56) References cited:
- EP-A- 0 999 076
- EP-A1- 1 552 964
- GB-A- 2 337 570

## Description

### BACKGROUND OF THE INVENTION

This invention relates to a rolling bearing device for a wheel, in which a hub bolt for mounting a wheel is press-fitted and fixed in a flange of a hub wheel having a hub spindle to be assembled with a rolling bearing.

In the rolling bearing device for the wheel of this kind, when a serrated shank portion formed on the root (head) side of the hub bolt is press-fitted and fixed in a bolt hole formed in the flange of the hub wheel, burrs are formed at the opening edge of the press-fit exit of the bolt hole of the flange.

In the known prior art, therefore, the bolt hole is formed in the opening on the press-fit exit side with a counter-bore, in which burrs resulting from the press-fitting are confined (as referred to JP-A-3-157202, for example).

Here in the disclosure of JP-A-3-157202, while the flange of the hub wheel being placed and being positioned and fixed on the mounting surface of the mounting table of a press-fit apparatus, the burrs are confined in the counter-bore of the press-fit exit of the bolt hole when the serrated shank portion of the hub bolt is press-fitted in the bolt hole of the flange.

However, the abrasion powder due to the press-fit or the burr residue to come out of the burrs may be scattered to fall down from the counter-bore onto the mounting surface of the mounting table.

After this press-fit, moreover, when the hub wheel is raised and transferred onto the manufacture line of the next step, the abrasion powder or burr residue may be scattered to fall onto the manufacture line of the next step.

This raises a problem that the flange of the hub wheel to be placed on the mounting surface of the mounting table and to be positioned and fixed may be later damaged by the abrasion powder or burr residue having fallen on the mounting surface.

Moreover, the hub wheel may also be damaged by the abrasion powder or burr residue scattered to fall down on the manufacture line of the next step.

Therefore, at each step of press-fitting the shank of the hub bolt in the bolt hole of the flange, the abrasion powder or burr residue scattered to fall down on the mounting surface of the mounting table has to be removed, and this work is so troublesome as to take many works and a long time thereby to deteriorate the productivity. Moreover, the many troubles and the long time are also required for the troublesome works to eliminate the abrasion powder or burr residue scattered to fall down on the manufacturing line of the next step.

EP 0 999 076 A2 which is considered as closest prior art discloses a stud comprising a head and a stem with a threaded end length and a length having an axial knurling proximate to the head and adapted to be driven with radial interference into an axial bore of a radial flange portion fast for rotation with the hub of a motor vehicle wheel.

### SUMMARY OF THE INVENTION

In view of the problems thus far described, an object of the invention is to provide a rotting bearing device for a wheel, which can prevent the abrasion powder or burr residue from being scattered to fall down onto the mounting surface of the mounting table of the press-fit apparatus when the serrated shank portion of the hub bolt is press-fitted in the bolt hole of the flange.

Further, another object of the invention it to provide a rolling bearing device for a wheel, which can suppress the release of abrasion powder or burr residue when the serration shank portion of the hub bolt is press-fitted into bolt hole of the flange.

According to the invention, the objects are solved by the features of claim 1, the sub-claims describe further developments of the invention.

### Brief Description of the Drawings

-Fig. 1 is a sectional side elevation showing a wheel hub unit as a rolling bearing device for a wheel according to Embodiment 1 of the invention.
Fig. 2 is a sectional view showing the state, in which a hub bolt is press-fitted in a bolt hole of a flange of a hub wheel of the same, in an enlarged scale.
Fig. 3 is an explanatory view showing a relation between the bolt hole of the flange of the same and a serrated shank portion of the hub bolt.
Fig. 4 is a sectional side elevation showing a wheel hub unit as a rolling bearing device for a wheel according to Embodiment 2 of the invention.
Fig. 5 is a sectional view showing the state, in which a hub bolt is press-fitted in a bolt hole of a flange of a hub wheel of the same, in an enlarged scale.
Fig. 6 is an explanatory view showing a state before a hub bolt is press-fitted in the bolt hole of the flange of the hub wheel of the same.
Fig. 7 is a sectional view showing the state, in which a hub bolt is press-fitted in a bolt hole of a flange of a hub wheel according Embodiment 3 of the invention, in an enlarged scale.
Fig. 8 is an explanatory view showing a state before the hub bolt is press-fitted in the bolt hole of the flange of the hub wheel of the same.
Fig. 9 is a sectional side elevation showing a wheel hub unit as a rolling bearing device for a wheel according to Embodiment 4 of the invention.
Fig. 10 is a sectional view showing a state before a shank of a hub bolt is press-fitted in a bolt hole of a flange of the same, in an enlarged scale.
Fig. 11 is a sectional view showing the state, in which the shank of the hub bolt is press-fitted in the bolt hole of the flange of the same, in an enlarged scale.
Fig. 12 is a sectional side elevation showing a wheel hub unit as a rolling bearing device for a wheel according to Embodiment 5 of the invention.
Fig. 13 is a sectional view showing the state, in which a hub bolt is press-fitted in a bolt hole of a flange of a hub wheel of the same, in an enlarged scale.
Fig. 14 is an explanatory view showing a relation between the bolt hole of the flange of the same and a serrated shank portion of the hub bolt.
Fig. 15 is an explanatory view showing the initial press-fit state, in which the root side of a chamfered portion of the serrated shank portion of the hub bolt abuts against the chamfered portion of the bolt hole of the flange of the same.
Fig. 16 is a sectional view showing a hub unit according to an embodiment 6 of the invention.
-Fig. 17 is a sectional view showing the hub unit of the invention in an enlarged scale.

### DESCRIPTION OF THE PREFERRED EMBODIMENTS

### Embodiment 1

Embodiment 1 of the invention will be described with reference to the accompanying drawings.

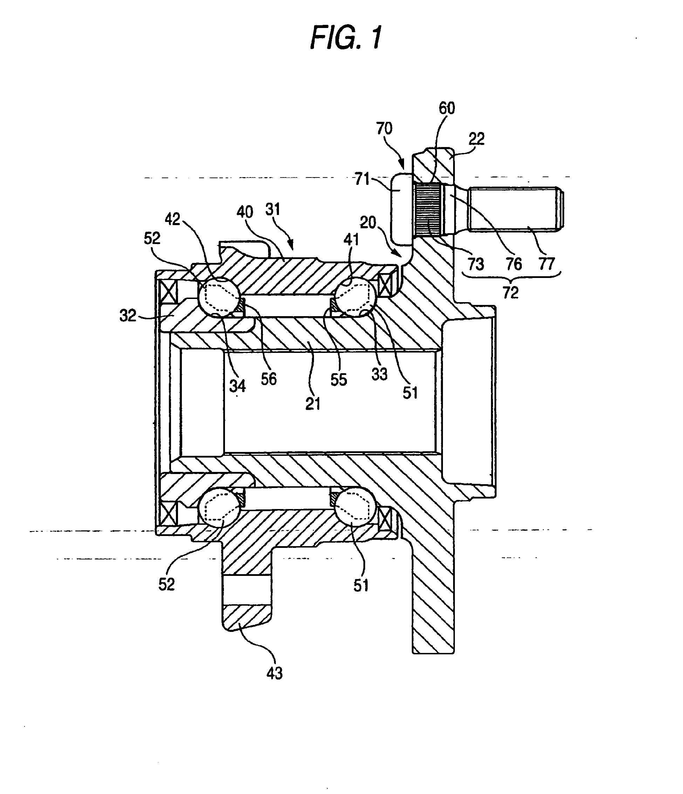

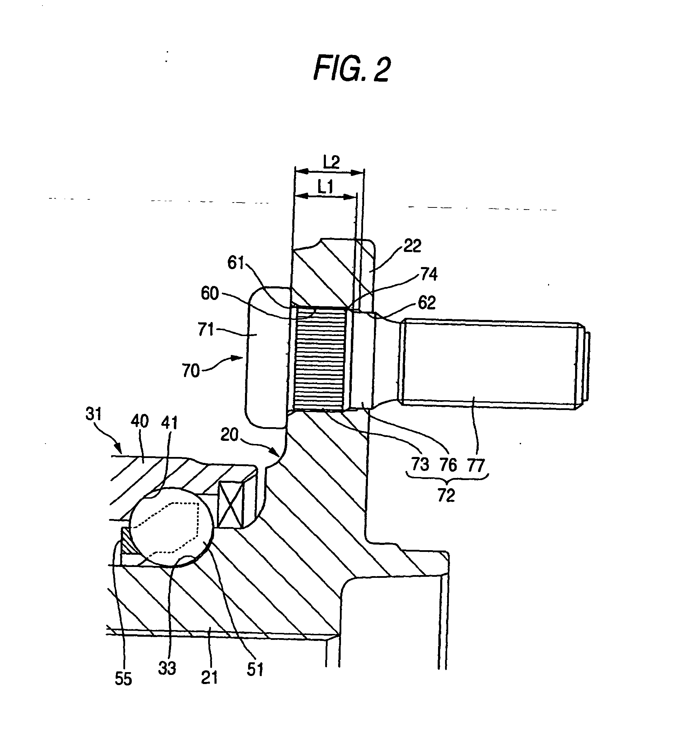

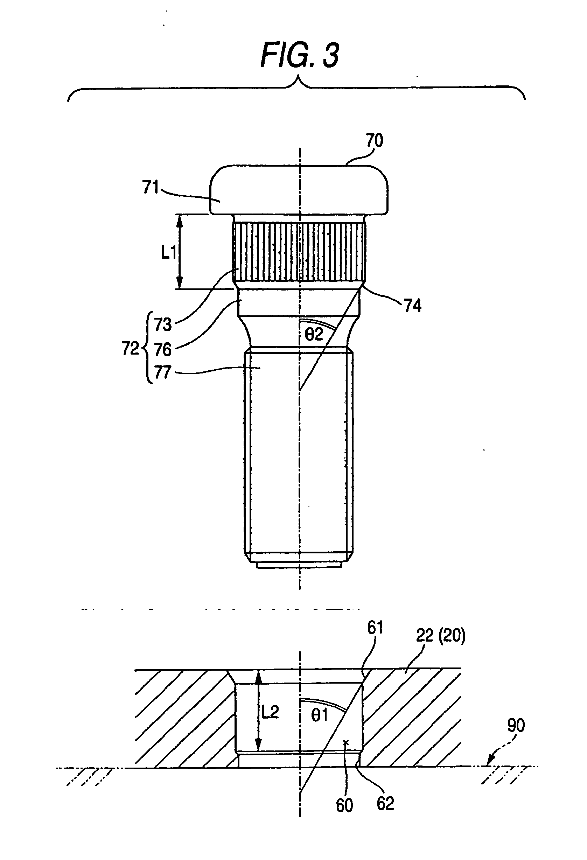

Fig. 1 is a sectional side elevation showing a wheel hub unit as a rolling bearing device for a wheel according to Embodiment 1 of the invention. Fig. 2 is a sectional view showing the state, in which a hub bolt is press-fitted in a bolt hole of a flange of a hub wheel, in an enlarged scale. Fig. 3 is an explanatory view showing a relation between the bolt hole of the flange and the hub bolt.

As shown in Fig. 1, the wheel hub unit acting as the wheel rolling bearing device is integrated into a unit with a hub wheel 20 and a double-row angular ball bearing 31.

The hub wheel 20 is integrated with a cylindrical hub spindle 21, and a flange 22 formed on the outer circumference close to one end portion of the hub spindle 21. The double-row angular ball bearing 31 is assembled on the outer circumference of the hub spindle 21. Specifically, an outer ring 40 is arranged at a predetermined spacing from two raceway surfaces 33 and 34 disposed along the outer circumference of the hub spindle 21. A plurality of balls 51 and 52 acting as rolling elements are assembled, respectively, between two raceway surfaces 41 and 42 formed in the inner circumference of the outer ring 40 and the two raceway surfaces 33 and 34 of the hub spindle 21. These balls 51 and 52 are retained in cages 55 and 56, respectively, to constitute the angular ball bearing 31.

In Embodiment 1, as shown in Fig. 1, of the two raceway surfaces 33 and 34 formed in the outer circumference of the hub spindle 21, the raceway surface 33, as positioned on the side of the flange 22 of the hub spindle 21, is formed by grinding the outer circumference of the hub spindle 21, and the raceway surface 34 on the leading end side of the hub spindle 21 is formed in an outer circumference of an inner ring 32 press-fitted and fixed on the outer circumference close to the leading end of the hub spindle 21.

The hub wheel 20 is connected in a torque transmittable manner by spline-fitting a shaft (e.g., a drive shaft) into the bore of the hub spindle 21 and then by fastening a nut on an externally threaded portion at its shaft leading end.

A flange 43, at which the wheel hub unit is connected to a mounting face of a vehicular member such as a knuckle or carrier supported by the suspension (although not shown) of the vehicle by means of bolts is integrally formed at the axially central portion of the outer circumference of the outer ring 40.

As shown in Fig. 1 and Fig. 2, the flange 22 of the hub wheel 20 is formed at a predetermined pitch with a plurality of bolt holes 60, in which a plurality of hub bolts 70 for attaching a wheel are press-fitted and fixed.

As shown in Fig. 3, a chamfered portion 61, which has a predetermined chamfering angle (e.g., a chamfering angle of about 20 to 45 degrees) θ1 with respect to the center axis is formed in an opening on a press-fit entrance side of the bolt hole 60 of the flange 22,

An annular ridge 62 for reducing the diameter of the bolt hole 60 and for clogging the bolt hole 60 in contact with or close to an intermediate shank portion 76 of the hub bolt 70, as will be detailed, is formed at an inner circumference of an opening on a press-fit exit side of the bolt hole 60 of the flange 22.

Here, a boring tool, which is equipped on its outer circumference with a cutting edge corresponding to the inner circumference of the bolt hole 60 and at its leading end portion with a cutting edge corresponding to the inner circumference of the annular ridge 62, can be used to form the bolt hole 60 and the annular ridge 62 at the flange 22 at the same time.

As shown in Fig. 2 and Fig. 3, the hub bolt 70 is integrally provided with a head 71 and a shank 72. The shank 72 is formed with a serrated shank portion 73, an intermediate shank portion 76 and an externally threaded portion 77 in this order from the root portion to the leading end side of the head 71.

The external diameter of the serrated shank portion 73 is made slightly larger than the internal diameter of the bolt hole 60, and the external diameter of the intermediate shank portion 76 is made substantially equal to the internal diameter of the annular ridge 62 of the bolt hole 60. Specifically, the intermediate shank portion 76 may be either press-fitted on the annular ridge 62 or inserted with a slight clearance by a low force, and is formed to have a larger external diameter than that of the threaded portion 77. When the serrated shank portion 73 of the hub bolt 70 is press-fitted in the bolt hole 60, the annular ridge 62 of the bolt hole 60 comes either into contact with or close to the intermediate shank portion 76 thereby to clog the bolt hole 60.

In Embodiment 1, the length L1 from the lower face of the head 71 of the hub bolt 70 to the leading end of the serrated shank portion 73 is set suitably shorter than the hole length L2 from the press-fit entrance of the bolt hole 60 to the annular ridge 62.

A chamfered portion 74, which has an angle of inclination θ2 of 30 degrees or less is formed at the press-fit side end portion of the serrated shank portion 73.

With the wheel hub unit thus constituted as the wheel rolling bearing device according to Embodiment 1, in case the hub bolt 70 is press-fitted and fixed in the flange 22 of the hub wheel 20, the flange 22 of the hub wheel 20 is placed on a mounting surface 90 of a mounting table of a press-fit apparatus, as shown in Fig. 3 and is positioned and fixed by the not-shown fixing jig.

Then, the shank 72 of the hub bolt 70 is inserted from the press-fit entrance side opening of the bolt hole 60 of the flange 22 of the hub wheel 20, and the serrated shank portion 73 of the root side of the shank 72 is press-fitted in the bolt hole 60. As a result, the hub bolt 70 is fixed in the flange 22 of the hub wheel 20.

When the serrated shank portion 73 of the hub bolt 70 is press-fitted in the bolt hole 60, the serrated shank portion 73 may bite into the bolt hole 60 thereby to scrape the inner circumference of the bolt hole 60 and to release the abrasion powder or burr residue.

On the other hand, the annular ridge 62 formed on the inner circumference of the opening on the press-fit exit side of the bolt hole 60 comes into contact with or close to the intermediate shank portion 76 of the hub bolt 70 thereby to clog the bolt hole 60. As a result, the abrasion powder or burr residue can be confined in the bolt hole 60 so that it can be prevented from being scattered to fall down on the mounting face of the mounting table of the press-fit apparatus.

Moreover, the abrasion powder or burr residue is not scattered to fall down on the manufacture line of a step next to the press-fitting step.

As a result, it is possible to prevent the damage of the flange 22, as might otherwise be caused by the abrasion powder or burr residue to be released at the press-fitting time.

In Embodiment 1, moreover, the length L1 from the lower face of the head 71 of the hub bolt 70 to the leading end of the serrated shank portion 73 is set shorter than the hole length L2 from the press-fit entrance of the bolt hole 60 to the annular ridge 62.

As shown in Fig. 2, therefore, when the serrated shank portion 73 is press-fitted in the bolt hole 60 so far as the predetermined position, in which the lower face of the head 71 of the hub bolt 70 abuts against one side face of the flange 22, the annular ridge 62 does not become an obstacle to the press-fit of the serrated shank portion 73. As a result, the serrated shank portion 73 can be reliably press-fitted so far in the bolt hole 60 as to reach the predetermined position, in which the lower face of the head 71 of the hub bolt 70 abuts against one side face of the flange 22.

Moreover, the chamfered portion 74 located at the press-fit side end portion of the serrated shank portion 73 and having the chamfering angle θ2 of 30 degrees or less can suppress the release of the abrasion powder or burr residue due to the press-fit of the serrated shank portion 73, so that it has a high effect on the damage prevention of the flange 22 due to the abrasion powder or burr residue.

### Embodiment 2

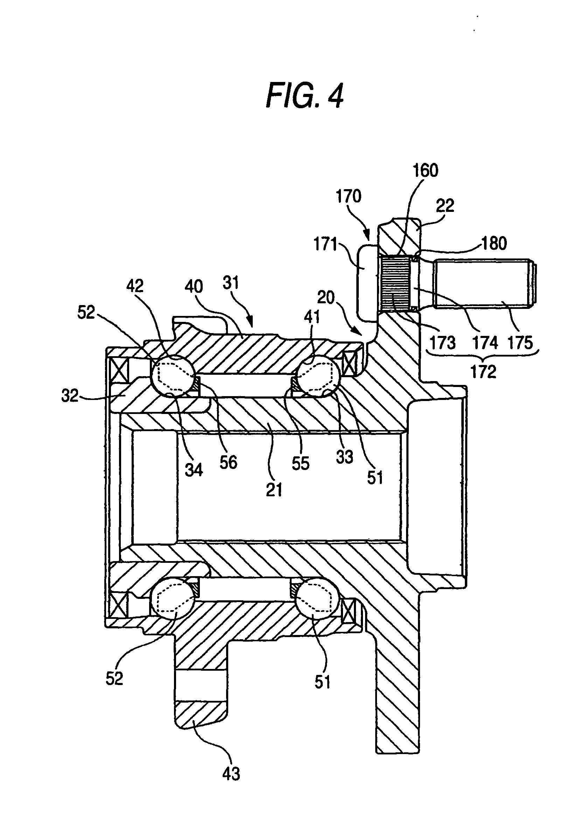

An embodiment 2 according to the present invention will be described with reference to Fig. 4 to 6.

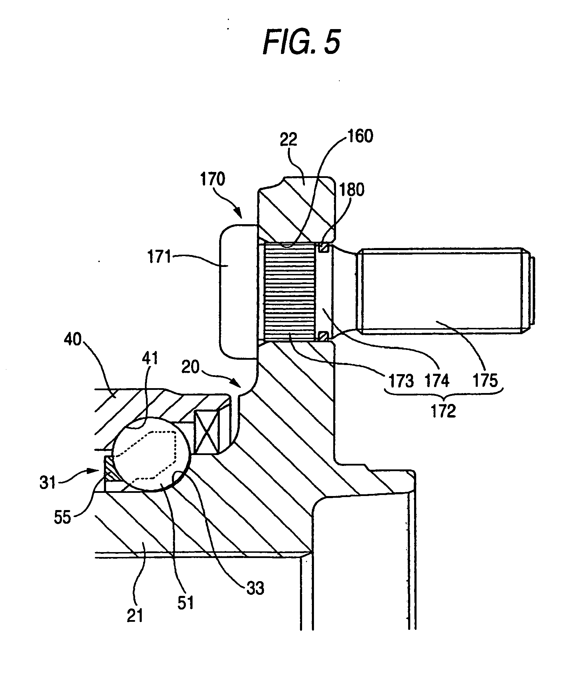

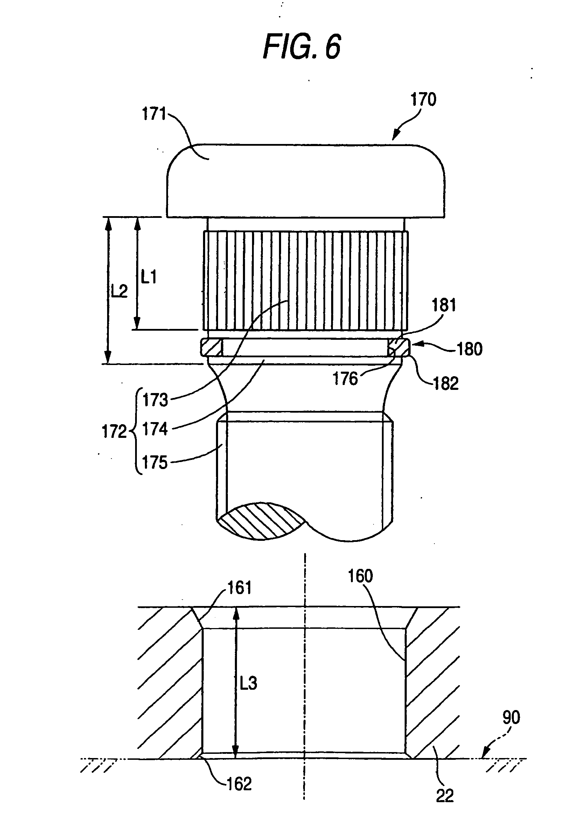

Fig. 4 is a sectional side elevation showing a wheel hub unit as a rolling bearing device for a wheel according to Embodiment 2 of the invention. Fig. 5 is a sectional view showing the state, in which a hub bolt is press-fitted in a bolt hole of a flange of a hub wheel of the same, in an enlarged scale. Fig. 6 is an explanatory view showing a state before a hub bolt is press-fitted in the bolt hole of the flange of the hub wheel of the same.

In Embodiment 2, members the same as those of the Embodiment 1 are attached with the same reference numerals and detailed explanation thereof will be omitted.

As shown in Fig. 4 and Fig. 5, the flange 22 of the hub wheel 20 is formed at a predetermined pitch with a plurality of bolt holes 160, in which a plurality of hub bolts 170 for attaching a wheel are press-fitted.

As shown in Fig. 6, chamfered portions 161 and 162 are formed at predetermined angles, respectively in the opening on the press-fit entrance side and in the opening on the press-fit exit side of the bolt hole 160 of the flange 22.

As shown in Fig. 6, the hub bolt 170 is integrally provided with a head 171 and a shank 172. The shank 172 is formed with a serrated shank portion 173, an intermediate shank portion 174 and a threaded portion 175 in this order from the root portion to the leading end side of the head 171. Moreover, the external diameter of the serrated shank portion 173 is made slightly larger than the internal diameter of the bolt hole 160, and the external diameter of the intermediate shank portion 174 is made slightly smaller than the internal diameter of the bolt hole 160 and slightly larger than the external diameter of the threaded portion 175.

A length L1 from the lower face of the head 171 of the hub bolt 170 to the leading end of the serrated shank portion 173 is set suitably shorter than a hole length L3 of the bolt hole 160, and a length L2 from the head 171 to the leading end of the intermediate shank portion 174 is set substantially equal to the hole length L3 of the bolt hole 160.

At least one of the two circumferences of the inner circumference of the bolt hole 160 of the flange 22 and the confronting outer circumference of the intermediate shank portion 174 of the hub bolt 170 is provided with an annular member 180 for confining the abrasion powder or burr residue, as released when it is press-fitted while contacting with the other circumference, in the bolt hole 160. The annular member 180 is formed of a material such as a synthetic resin or rubber (e.g., a polyamide resin) having a lower hardness than the surface hardness of the flange 22 made of a metal such as steel.

In Embodiment 2, as shown in Fig. 6, the intermediate shank portion 174 of the hub bolt 170 is formed in its outer circumference with an annular recess 176, in which the annular member 180 is buried and fixed on its inner circumference side while the outer circumference side 182 of the annular member 180 is protruded by a predetermined extent from the outer circumference of the intermediate shank portion 174. With the annular member 180 being fixed in the annular recess 176 of the intermediate shank portion 174, the external diameter of the annular member 180 is set slightly larger than the internal diameter of the bolt hole 160.

After the annular member 180 was formed separately of the hub bolt 170, the annular member 180 can be fitted, while being elastically expanded, in the annular recess 176 of the intermediate shank portion 174 of the hub bolt 170, so that the inner circumference side 181 of the annular member 180 can be buried and fixed in the annular recess 176.

It is also possible to mold the annular member 180 integrally by an insert molding method with the annular recess 176 of the intermediate shank portion 174 of the hub bolt 170, and to bury and fix the inner circumference side 181 of the annular member 180 in the annular recess 176.

With the wheel hub unit thus constituted as the wheel rolling bearing device according to Embodiment 2, when the shank 172 of the hub bolt 170 is press-fitted in the bolt hole 160 of the flange 22 of the hub wheel 20, the flange 22 of the hub wheel 20 is placed on a mounting surface 90 (an upper surface) of the mounting table of a press-fit apparatus, as shown in Fig. 6, and is positioned and fixed by the not-shown fixing jig.

Then, the shank 172 of the hub bolt 170 is inserted from the one-side (or upper-side) opening of the bolt hole 160 of the flange 22 of the hub wheel 20, and-the serrated shank portion 173 of the root side of the shank 172 is press-fitted in the bolt hole 160. As a result, the serrated shank portion 173 bites into the bolt hole 160 so that the hub bolt 170 is fixed in the flange 22 of the hub wheel 20.

When the serrated shank portion 173 of the hub bolt 170 is press-fitted in the bolt hole 160, the serrated shank portion 173 and the inner circumference of the bolt hole 160 may be partially scraped by the press-in friction to release the abrasion powder or burr residue.

At this time, the annular member 180 fixed in the intermediate shank portion 174 of the hub bolt 170 moves in the press-fit direction while contacting with the inner circumference of the bolt hole 160, and the abrasion powder or burr residue can be confined in the bolt hole 160.

Thus, it is possible to prevent the abrasion powder or burr residue of the serrated shank portion 173 of the hub bolt 170 or the inner circumference of the bolt hole 160 from being scattered to the outside from the press-fit exit of the bolt hole 160. As a result, it is possible to eliminate the drawback that the abrasion powder or burr residue is scattered to fall down on the mounting surface 90 of the mounting table, or that the abrasion powder or burr residue is scattered, when the hub wheel 20 is raised after the press-fit and transferred on the manufacturing line of a next step, to fall down on the mounting surface 90 of the mounting table or the manufacturing line of the next step. Moreover, it is possible to prevent the damage of the flange 22 of the hub wheel 20, as might otherwise be caused by the scatter of the abrasion powder or burr residue.

In Embodiment 2, the inner circumference side 181 of the annular member 180 can be buried in the annular recess 176 formed in the outer circumference of the intermediate shank portion 174 of the hub bolt 170, so that the annular member 180 can be fixed stably and firmly. Therefore, it is possible to prevent the annular member 180 from being accidentally pushed out from the bolt hole 160 when the serrated shank portion 173 of the hub bolt 170 is press-fitted in the bolt hole 160. In addition, it is possible to confine the abrasion powder or burr residue of the serrated shank portion 173 of the hub bolt 170 or the inner circumference of the bolt hole 160 satisfactorily in the bolt hole 160.

In Embodiment 2, the length L1 from the lower face of the head 171 of the hub bolt 170 to the leading end of the serrated shank portion 173 is set suitably shorter than the hole length L3 of the bolt hole 160. Therefore, it is possible to suppress the release of the burrs on the circumferential edge of the press-fit exit of the bolt hole 160 of the flange 22.

In Embodiment 2, the annular member is formed of the material having a lower hardness than the surface hardness of the flange. When the shank of the hub bolt is press-fitted in the bolt hole, the annular member can be prevented from being damaged by the abrasion powder, even if the annular member is partially worn so that its abrasion powder sticks to the flange of the hub wheel.

### Embodiment 3

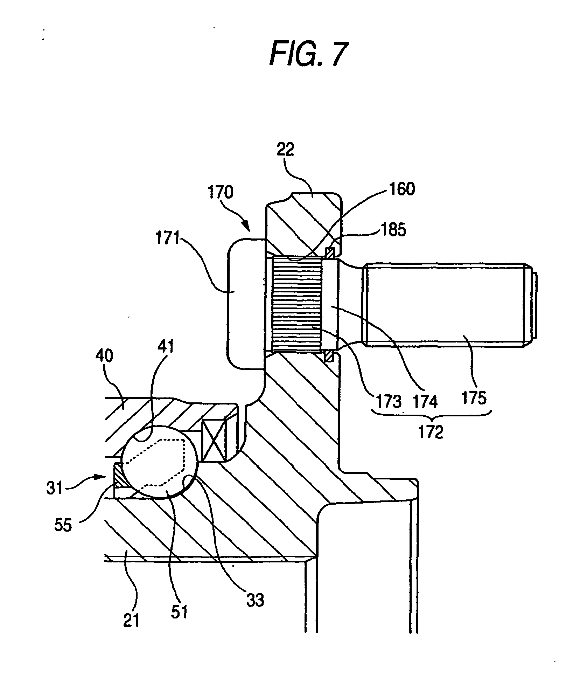

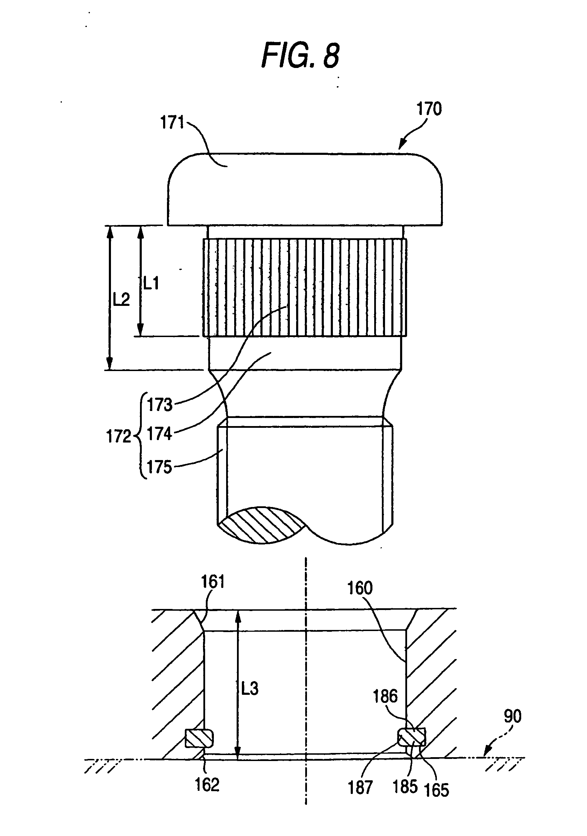

Next, Embodiment 3 of the invention will be described with reference to Fig. 7 and Fig. 8.

Fig. 7 is a sectional view showing the state, in which a hub bolt is press-fitted in a bolt hole of a flange of a hub wheel according Embodiment 3 of the invention, in an enlarged scale. Fig. 8 is an explanatory view showing a state before the hub bolt is press-fitted in the bolt hole of the flange of the hub wheel.

In Embodiment 3, as shown in Fig. 7 and Fig. 8, an annular recess 165 is formed in the vicinity of the press-fit exit of the inner circumference of the bolt hole 160 of the flange 22. An annular member 185 is so fixed as has its outer circumference side 186 buried in that annular recess 165, and has its inner circumference side 187 protruded by a predetermined extent from the inner circumference of the bolt hole 160. With the annular member 185 being fixed in the annular recess 165 of the bolt hole 160, the internal diameter of the annular member 185 is set slightly smaller than the external diameter of the intermediate shank portion 174. Here, the annular member 185 is formed, in the same manner as Embodiment 2, of a material such as a synthetic resin or rubber (e.g., a polyamide resin) having a lower hardness than the surface hardness of the flange 22 made of a metal such as steel.

The remaining structures of Embodiment 3 are made in the same manner as those of Embodiment 2, and their common portions are omitted in their explanation by designating them by the common reference numerals.

Therefore, Embodiment 3 can also attain advantages similar to those of Embodiment 2. In Embodiment 3, however, the outer circumference side 186 of the annular member 185 is buried in the annular recess 165 formed in the inner circumference of the bolt hole 160 of the flange 22, so that it can be fixed stably and firmly. Therefore, the annular member 185 can be prevented from being accidentally pushed out from the bolt hole 160 when the serrated shank portion 173 of the hub bolt 170 is press-fitted in the bolt hole 160. Moreover, the abrasion powder or burr residue on the serrated shank portion 173 of the hub bolt 170 and the inner circumference of the bolt hole 160 can be satisfactorily confined in the bolt hole 160.

Here, the invention should not be limited to Embodiments 2 and 3 thus far described.

In Embodiment 2, for example, the annular member 180 is fixed on its inner circumference side 181 in the buried state in the annular recess 176 of the intermediate shank portion 174 of the hub bolt 170. In Embodiment 3, alternatively, the annular member 185 is fixed on its outer circumference side 186 in the buried state in the annular recess 165 of the inner circumference of the bolt hole 160 of the flange 22. However, it is arbitrary to provide the annular recess 176 or 165, if necessary. The invention can also be practiced by the structure in which the annular recess 176 or 165 is not provided.

In this case, an annular member made of a material having a lower hardness than the surface hardness of the flange 22 may be fixed by means of an adhesive on either the outer circumference of the intermediate shank portion 174 of the hub bolt 170 or the inner circumference of the bolt hole 160 of the flange 22.

### Embodiment 4

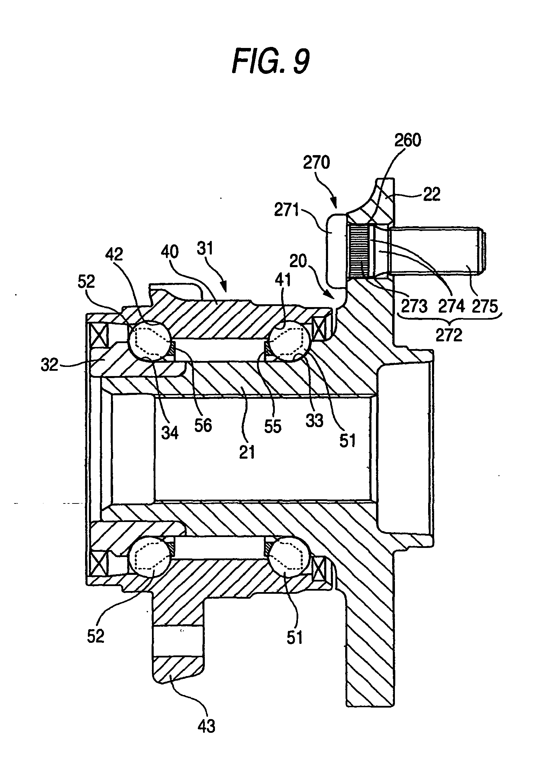

An embodiment 4 according to the present invention will be described with reference to Fig. 9 to 11.

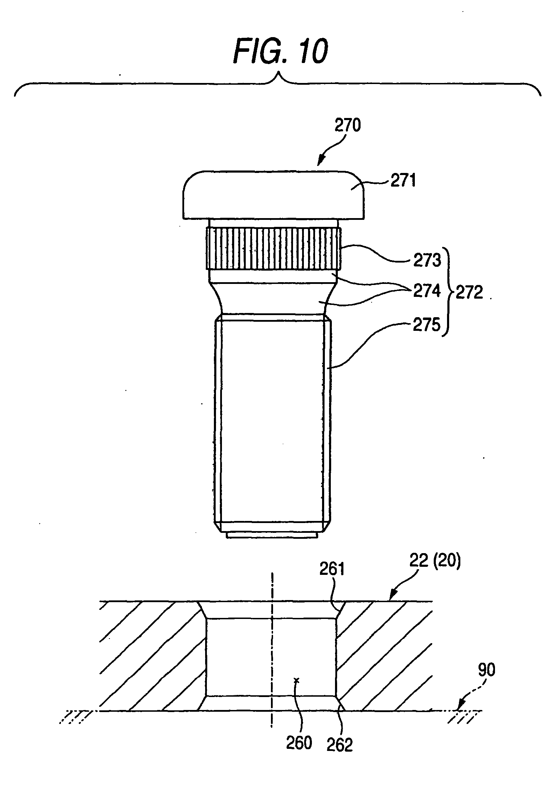

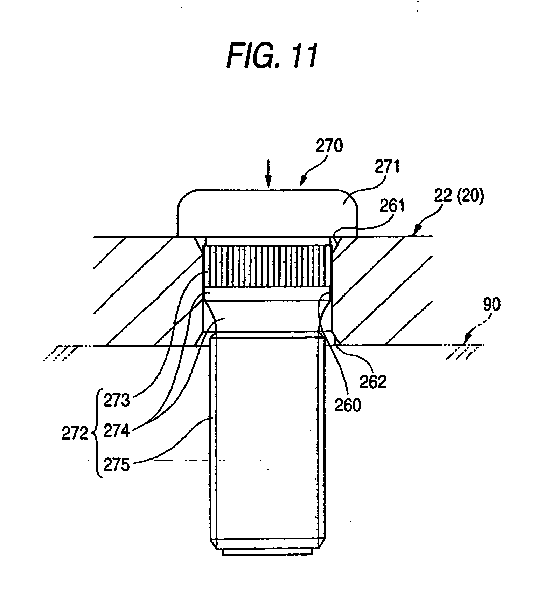

Fig. 9 is a sectional side elevation showing a wheel hub unit as a rolling bearing device for a wheel according to Embodiment 4 of the invention. Fig. 10 is a sectional view showing a state before a shank of a hub bolt is press-fitted in a bolt hole of a flange of the same, in an enlarged scale. Fig. 11 is a sectional view showing the state, in which the shank of the hub bolt is press-fitted in the bolt hole of the flange of the same, in an enlarged scale.

In Embodiment 4, members the same as those of the Embodiment 1 are attached with the same reference numerals and detailed explanation thereof will be omitted.

As shown in Fig. 9, the flange 22 of the hub wheel 20 is formed at a predetermined pitch with a plurality of bolt holes 260, in which a plurality of hub bolts 270 for attaching a wheel are press-fitted.

As shown in Figs. 10 and 11, chamfered portions 261 and 262 are formed at predetermined angles, respectively in the opening on the press-fit entrance side and in the opening on the press-fit exit side of the bolt hole 260 of the flange 22.

As shown in Fig. 10, the hub bolt 270 is integrally provided with a head 271 and a shank 272, of which the shank 272 is formed with the serrated shank portion 273, an intermediate shank portion 274 and a threaded portion 275 in the this order from the root portion to the leading end side of the head 271. The external diameter of the serrated shank portion 273 is made slightly larger than the internal diameter of the bolt hole 260, and the external-diameter of the intermediate shank portion 274 and the external diameter of the threaded portion 275 are made slightly smaller than the internal diameter of the bolt hole 260.

Moreover, the length from the lower face of the head 271 of the hub bolt 270 to the leading end of the serrated shank portion 273 is set suitably shorter than the hole length of the bolt hole 260.

Next, a method for manufacturing a wheel hub unit as a rolling bearing device for a wheel is described.

At first, there are prepared the hub wheel 20 having a plurality of bolt holes 260 formed at a predetermined pitch in the flange 22, and a plurality of hub bolts 270 having the head 271 and the shank 272 (i.e., the serrated shank portion 273, the intermediate shank portion 274 and the threaded portion 275) formed integrally therewith.

Here, at least one of the circumferential portion of each bolt hole 260 of the flange 22 and the shank 272 of each hub bolt 270 is magnetized by a magnetizing device.

In Embodiment 4, of the shank 272 of the easily magnetizable hub bolt 270, the intermediate shank portion 274 and its vicinity are magnetized by the (not-shown) magnetizing device.

As shown in Fig. 10, the flange 22 of the hub wheel 20 is placed on a mounting surface 90 of a mounting table of a press-fit apparatus, and is positioned and fixed by the not-shown fixing jig.

Here, the magnetizing step can also be performed either at a preceding step of positioning and fixing the flange 22 of the hub wheel 20 on the mounting surface 90 of the mounting table of the press-fit apparatus or after the flange 22 was positioned and fixed.

After the magnetization, as shown in Fig.11, the shank 272 of each hub bolt 270 is press-fitted downward into each bolt hole 260 of the flange 22 so that the serrated shank portion 273 of the shank 272 bites into the inner circumference of the bolt hole 260. As a result, each hub bolt 270 is fixed in each bolt hole 260 of the flange 22.

At the press-fitting time, when an abrasion powder or burr residue is released on the inner circumference of the bolt hole 260 of the flange 22 or at the serrated shank portion 273 of the hub bolt 270, the abrasion powder or burr residue is moved toward the opening on the press-fit exit side (or the chamfered portion 262) of the bolt hole 260 while being adsorbed by the magnetized portion (i.e., the magnetized portion of the intermediate shank portion 274 or its vicinity). As a result, the abrasion powder or burr residue is confined in the annular clearance, which is formed among the intermediate shank portion 274 of the hub bolt 270, the bolt hole 260 and the chamfered portion 262.

After the shank 272 of the hub bolt 270 is press-fitted and fixed in each bolt hole 260 of the flange 22, the hub wheel 20 is removed from the mounting surface 90 and then the clearing (or washing) of the periphery of the opening on the press-fit exit side of the bolt hole 260 is prepared or the removed hub wheel 20 is moved to a place where not trouble occurs even if the abrasion power or burr residue falls down. After this, the magnetized portion is demagnetized by the (not-shown) demagnetizing device. Just after this demagnetization, the periphery of the opening of the press-fit exit side of the bolt hole 260 is either washed with a washing liquid or cleaned by a suction of vacuum thereby to eliminate the abrasion powder or burr residue.

In this cleaning operation, the narrow area of the periphery of the press-fit exit portion of the bolt hole 260 is cleaned so that the abrasion powder or burr residue can be eliminated easily and quickly.

That is, if the abrasion powder or burr residue due to the press-fit is scattered to fall down on the mounting surface 90 of the mounting bed of the press-fit apparatus or on the manufacturing line of a next step, the work to eliminate abrasion powder or burr residue is so troublesome as to take many works and a long time thereby to deteriorate the productivity. In Embodiment 4, however, the abrasion powder or burr residue is adsorbed by the magnetized portion (i.e., the magnetized portion of the intermediate shank portion 274 and its vicinity) so that it is prevented from being scattered or is eliminated. Just after the demagnetization, therefore, the abrasion powder or burr residue can be eliminated easily and quickly by cleaning the narrow area of the periphery of the press-fit exit of the bolt hole, thereby to improve the productivity.

That is, when the abrasion powder or burr residue due to the press-fit is scattered to fall down on the mounting surface of the mounting table of the press-fit apparatus or on the manufacturing line of the next step, the work to eliminate abrasion powder or burr residue is so troublesome as to take many works and a long time thereby to deteriorate the productivity. According to the invention, however, the abrasion powder or burr residue is prevented from being scattered or is eliminated. The abrasion powder or burr residue can be eliminated easily and quickly by cleaning the narrow area of the periphery of the press-fit exit of the bolt hole, thereby to improve the productivity.

Moreover, the assembly of an angular ball bearing 31 as the rolling bearing with the hub spindle 21 of the hub wheel 20 may be performed after the aforementioned cleaning step or at the step before the press-fit step of the hub bolt 270.

Here, the invention should not be limited to Embodiment 4.

In Embodiment 4, for example, the shank 272 of the hub bolt 270 is magnetized at the magnetizing step, but the circumferential edge portion of the bolt hole 260 of the flange 22 may be magnetized instead. Alternatively, both the shank 272 of the hub bolt 270 and the circumferential portion of the bolt hole 260 of the flange 22 may be magnetized.

In Embodiment 4, after the press-fit step of the hub bolt 270 was completed, the hub wheel 20 is removed from the mounting surface 90 of the press-fit apparatus. After this, the demagnetization is performed, and the periphery of the press-fit exit portion of the bolt hole 260 is cleaned (or washed). However, the demagnetization may not be performed just after the completion of the press-fit step, but the subsequent steps may be executed while remaining in the magnetized step. The demagnetization may be performed at the final step, followed by the cleaning (or washing) step. However, the method of Embodiment 4 is preferable, because the abrasion powder or burr residue may come out in case an unintended serious shock is applied to the hub wheel 20 on the manufacturing line.

### Embodiment 5

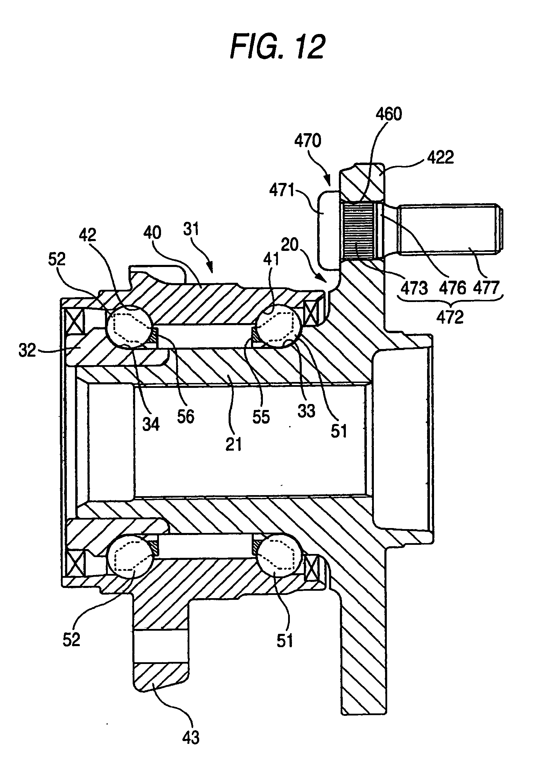

Embodiment 5 of this invention will be described with reference to Fig. 12 to Fig. 15.

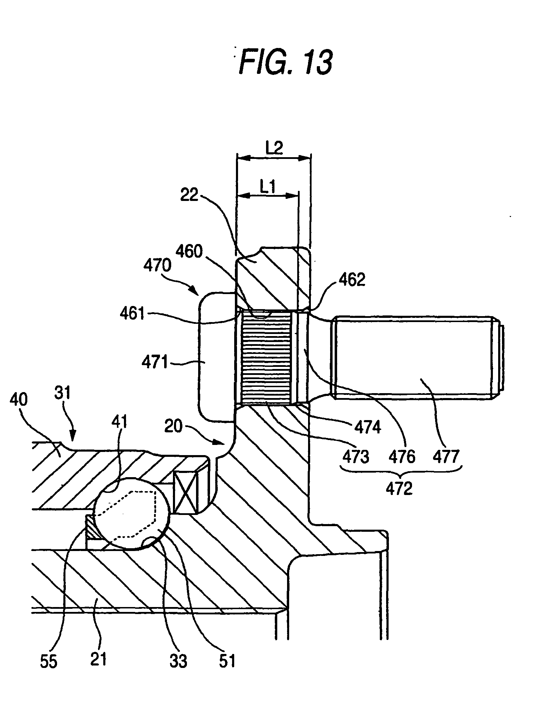

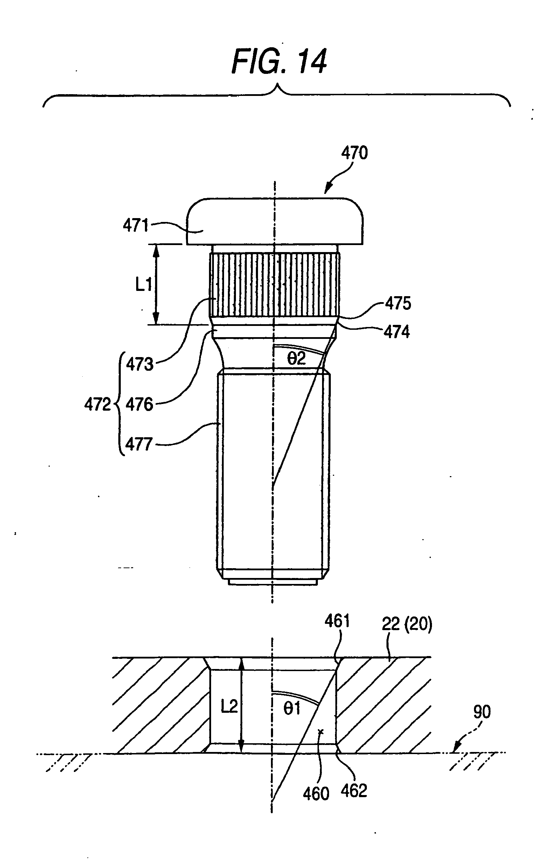

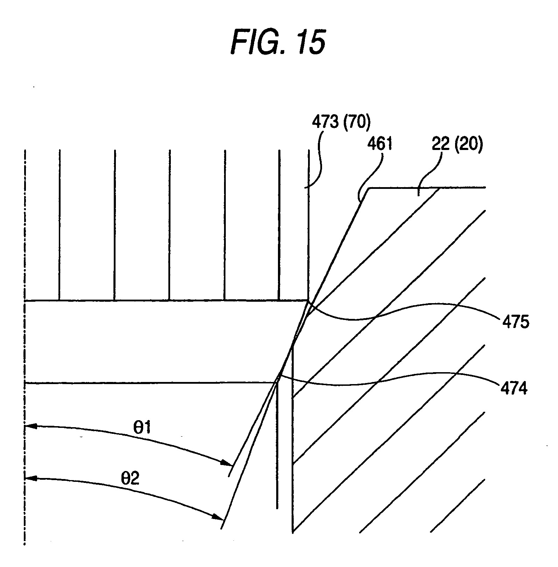

Fig. 12 is a sectional side elevation showing a wheel hub unit as a rolling bearing device for a wheel according to Embodiment 5 of the invention. Fig. 13 is a sectional view showing the state, in which a hub bolt is press-fitted in a bolt hole of a flange of a hub wheel, in an enlarged scale. Fig. 14 is an explanatory view showing a relation between the bolt hole of the flange and a serrated shank portion of the hub bolt. Fig. 15 is an explanatory view showing the initial press-fit state, in which the root side of a chamfered portion of the serrated shank portion of the hub bolt abuts against the chamfered portion of the bolt hole of the flange.

In Embodiment 5, members the same as those of the Embodiment 1 are attached with the same reference numerals and detailed explanation thereof will be omitted.

As shown in Fig. 12 and Fig. 13, the flange 22 of the hub wheel 20 is formed at a predetermined pitch with a plurality of bolt holes 460, in which a plurality of hub bolts 470 for attaching a wheel are press-fitted.

As shown in Fig. 14, a chamfered portion 461, which has an inclination angle θ1 of about 20 to 35 degrees with respect to the center axis is formed in the opening on the press-fit entrance side of the bolt hole 460 of the flange 22.

If the inclination angle θ1 of the chamfered portion 461 is made smaller than 20 degrees, it may be difficult to retain a sufficient press-fit length for a serrated shank portion 473, as described in the following. If the inclination angle θ1 is made larger than 35 degrees, on the other hand, it may be difficult to press-fit the serrated shank portion 473.

On the other hand, a chamfered portion 462, which has an inclination angle θ2 of about 30 to 45 degrees with respect to the center axis is formed in the opening on the press-fit exit side of the bolt hole 460.

As shown in Fig. 13 and Fig. 14, the hub bolt 470 is integrally provided with a head 471 and a shank 472. The shank 472 is formed with the serrated shank portion 473, an intermediate shank portion 476 and a threaded portion 477 in this order from the root portion to the leading end side of the head 471. The external diameter of the serrated shank portion 473 is made slightly larger than the internal diameter of the bolt hole 460, and the external diameter of the intermediate shank portion 476 is made slightly smaller than the internal diameter of the bolt hole 360 and slightly larger than the external diameter of the threaded portion 477.

The length L1 from the lower face of the head 471 of the hub bolt 470 to the leading end of the serrated shank portion 473 is set suitably shorter than the hole length L2 of the bolt hole 460.

As shown in Fig. 14 and Fig. 15, the chamfered portion 474, which has an inclination angleθ2 smaller than the aforementioned inclination angle θ1 with respect to the center axis is formed at the press-fit leading end portion of the serrated shank portion 473.

The inclination angle θ2 of the chamfered portion 474 of the serrated shank portion 473 is preferably set to 75-85%, preferably about 80 %, of the inclination angle θ1 of the chamfered portion 461 of the bolt hole 460.

In Embodiment 5, the inclination angle θ1 of the chamfered portion 461 of the bolt hole 460 is set at 25 degrees, and the inclination angle θ2 of the chamfered portion 474 of the serrated shank portion 473 is set at 20 degrees.

With the wheel hub unit thus constituted as the wheel rolling bearing device according to Embodiment 5, in case the hub bolt 470 is press-fitted and fixed in the flange 22 of the hub wheel 20, the flange 22 of the hub wheel 20 is placed on a mounting surface 90 of the mounting table of a press-fit apparatus, as shown in Fig. 14 and is positioned and fixed by the not-shown fixing jig.

Then, the shank 472 of the hub bolt 470 is inserted from the one-side opening of the bolt hole 460 of the flange 22 of the hub-wheel 20, and the serrated shank portion 373 of the root side of the shank 472 is press-fitted in the bolt hole 460. As a result, the hub bolt 470 is fixed in the flange 22 of the hub wheel 20.

As shown in Fig. 15, the inclination angle θ2 of the chamfered portion 474 of the serrated shank portion 473 is set smaller than the inclination angle θ1 of the chamfered portion 461 of the press-fitted entrance side of the bolt hole 460. When the serrated shank portion 473 of the hub bolt 470 is press-fitted in the bolt hole 460, at first, the rood side of the chamfered portion 474 of the serrated shank portion 473 abuts against the chamfered portion 461 of the bolt hole 460 rather than that the outer circumference edge portion 475 of the chamfered portion 472 abuts against the chamfered portion 461. Thus, the serrated shank portion 473 is press-fitted with its chamfered portion 474 while abutting earlier at its root side.

Thus, the chamfered portion 461 and the inner circumference of the bolt hole 460 of the flange 22 are prevented from being scraped by the outer circumference edge portion 475 of the chamfered portion 474 of the serrated shank portion 473. As a result, it is possible to suppress the release of abrasion powder or burr residue at the press-fitting time and to prevent the damage of the flange 22 due to the abrasion powder or burr residue.

In Embodiment 5, the inclination angle θ1 of the chamfered portion 461 of the bolt hole 460 is set at about 20 to 35 degrees with respect to the center axis. Therefore, the serrated shank portion 473 of the hub bolt is smoothly press-fitted in the bolt hole 460.

Moreover, the inclination angle θ2 of the chamfered portion 474 of the serrated shank portion 473 is set to 75-85%, preferably about 80 %, of the inclination angle θ1 of the chamfered portion 461 of the bolt hole 460. Even with dispersions in the chamfering angles θ1 and θ2 or the sizes of the individual chamfered portions 461 and 474 of the serrated shank portion 473 and the bolt hole 460, it is possible to keep the relation of "the inclination angle θ2 > the inclination angle θ1". Thus, it is possible to prevent the chamfered portion 461 and the inner circumference of the bolt hole 460 of the flange 22 from being scraped by the outer circumference edge portion 475 of the chamfered portion 474 of the serrated shank portion 473.

In Embodiment 5, the length L1 from the lower face of the head 471 of the hub bolt 470 to the leading end of the serrated shank portion 473 is set suitably shorter than the hole length L2 of-the bolt hole 460. As a result, it is possible to suppress the release of burrs at the circumferential edge of the opening on the press-fit exit side of the bolt hole 460 of the flange 22.

### Embodiment 6

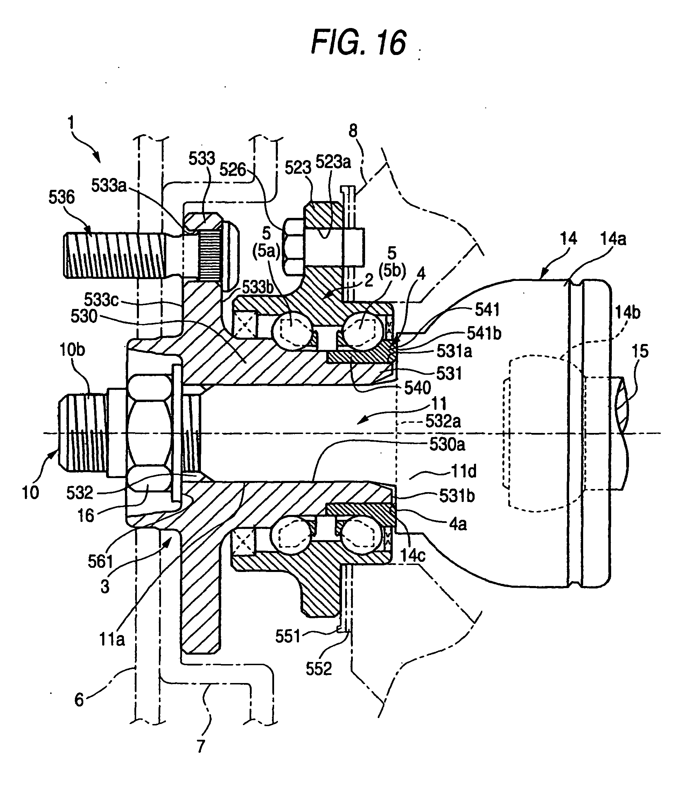

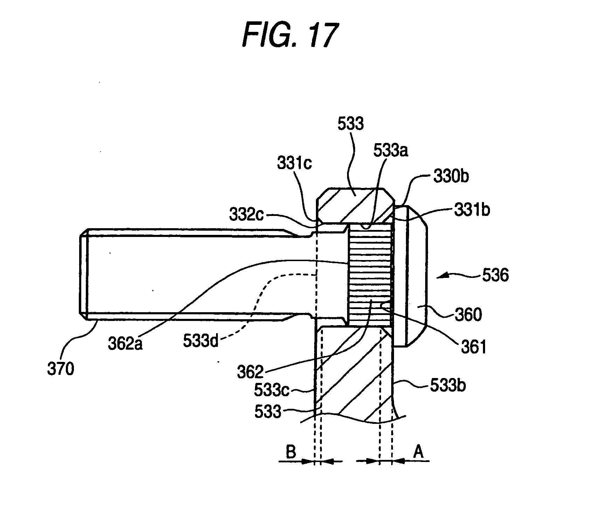

Embodiment 6 according to the invention will be described in the following with reference to the accompanying drawings. Fig. 16 is a sectional view showing a hub unit as a rolling bearing device for a wheel according to an embodiment 6 of the invention and a mounting structure in which the hub unit is mounted on an axle shaft, Fig. 17 is an enlarged view of a hub flange 33 and a hub bolt of Fig. 16. In both Figures, the left side is located on a vehicular outer side, and the right side is located on a vehicular inner side. The hub unit 1 of the invention includes an outer ring 2, a hub wheel 3, an inner ring 4 and rolling element rows 5 (5a, 5b), and is mounted for use on an axle shaft 10.

The hub wheel 3 includes a hub spindle 530 and a wheel mounting flange (as will be called the "hub flange") 533 for fixing the tire wheel 6 of a vehicular wheel and a brake disc rotor 7 of a brake device. The hub wheel 3 is arranged concentrically with the outer ring 2, and has the tire wheel (or the vehicular wheel) 6 and the brake disc rotor 7 mounted thereon so that it rotates integrally therewith. The inner ring 4 is fitted on the outer circumference of the end portion of the hub spindle 530 on the vehicular inner side, and the rolling element rows 5 and 5 are arranged in a plurality of rows between the inner ring 4 and the hub wheel 3, and the outer ring 2.

The rolling element rows 5 include rolling elements arrayed in the circumferential direction between the inner ring 4 or the hub wheel 3 and the outer ring 2, and are arranged in a plurality of rows in an axial direction. In this embodiment, the two rolling element rows (5a, 5b) are arranged between the inner ring 4 or the hub wheel 3, and the outer ring 2.

The outer ring 2 is irrotationally mounted on the vehicular body side. The outer ring 2 is hot-forged of carbon steel and has a plurality of rows of raceway surfaces on its inner circumference, an outer ring flange portion protruded in the radial directions on its outer circumference, and bolt holes 523a formed in the axial direction. Bolts 526 are inserted into the bolt holes 523a so that the outer ring 2 is fixed through a back plate 551 and an end plate 552 to a knuckle 8 on the vehicular body side. When the outer ring 2 is fixed on the knuckle 8, the hub unit 1 is fixed on the vehicular body.

The inner ring 4 is press-fitted in the radially smaller outer circumference 531 a of at least a vehicular inner end portion 531 of the hub wheel 3. A protrusion (or a thick portion) 541, which is radially larger than an inner ring body portion 540 positioned on the vehicular outer side and which protrudes in the axial direction is formed in the inner ring 4. The protrusion 540 provides an end surface 541 b of the protrusion 541 on the vehicular inner side as an axle shaft receiving surface.

The hub spindle 530 of the hub wheel 3 includes a shaft hole 532 extending therethrough in the axial direction, and the hub flange 533 at the end portion of the vehicular outer side. As shown in Fig. 17, a hub bolt hole 533a, which extends therethrough in the axial direction for a hub bolt (as will be called the "hub bolt") to be press-fitted therein is formed through-the hub flange 533. A Rockwell hardness C-scale of the steel material for making the hub flange 533 is adjusted to HRC18 or higher and HRC28 or lower at its portion including the inner circumference of the hub bolt hole 533a.

In the hub bolt 536, a press-fitting and fixing serrated portion (as will be called the "serrated portion") 362 is formed in the circumferential direction on the outer circumference on the side of the shank root end of the hub bolt 536. An externally threaded portion 370 is formed at a leading end of the hub bolt 536. The hub bolt 536 is so mounted that the serrated portion 362 is press-fitted into the hub bolt hole 533a and a hub bolt head 360 formed on the side of a root end 361 abuts against the circumferential edge portion 330b of the hub bolt hole 533a on the vehicular inner side of the hub flange 533. A Vickers hardness of the steel material for making the hub bolt 536 is adjusted to Hv400 or higher and Hv500 or lower at its portion including the serrated portion 362.

In the hub flange 533, an opening circumferential edge portion 331c in a vehicular outer side main surface 533c of the hub bolt hole 533a is formed in a radially enlarged manner as an outer chamfered portion. A vehicular outer end edge 362a of the serrated portion 362 is positioned deeper to the vehicular inner side than a vehicular inner end edge 332c of the outer chamfered portion 331c. An opening circumferential edge portion 331 b in a vehicular inner side main surface 533b of the bolt hole 533a is formed in a radially enlarged manner as an inner chamfered portion. The inner chamfered portion 331 b has an axial width A larger than an axial width B of the outer chamfered portion 331c. In this embodiment, the axial width A of the inner chamfered portion 331 b is set to 4 mm, and the axial width B of the outer chamfered portion 331c is set to 2 mm. Here, a burr release can be reliably prevented, if the depth (axial distance) of the vehicular outer end edge 362a of the serrated portion 362 from the vehicular inner end edge to the vehicular inner side is set to at least 0.5 mm or more and 6 mm or less.

The hub bolt 536 is press-fitted in the hub bolt hole 533a of the hub flange 533. On the main surface of the hub flange 533 on the vehicular outer side, the brake disc rotor 7 and the tire wheel 6 are overlaid sequentially in the recited order, and are mounted by fastening the (not-shown) nuts on the hub bolts 536.

The axle shaft 10 is inserted through the shaft hole 532 of the hub wheel 3. The axle shaft 10 is interlocked through a shaft body (or a constant-velocity joint) forming a vehicular inner end portion 14 to a transmission shaft 15 for transmitting the output rotation of the differential mechanism outside of the drawing. The axle shaft 10 includes a spline portion 11 (as will be called the "hub mounting portion 11") as the hub mounting portion on the vehicular outer side. The axle shaft 10 has a threaded portion 10b on the vehicular outer side. On the vehicular inner side on the back side of a spline portion 10a, there is formed a diametrically larger portion 11 d which is formed to have a step and a larger diameter than that of the spline portion 11. An outer ring 14a of the constant-velocity joint 14 is so formed on the vehicular inner side of that diametrically larger portion 11d as to bulge diametrically outward. The constant-velocity joint 14 includes an inner ring 14b, the not-shown balls, and a cage. Moreover, a nut 16 is fastened as a fastening member on the threaded portion 10b of the axle shaft 10 on the vehicular outer side of the shaft hole 532.

When the hub mounting portion 11 of the axle shaft 10 is inserted into the shaft hole 532 of the hub unit 1, the vehicular inner end surface 4a of the inner ring 4 of the hub unit 1 and the vehicular outer end surface 14c of the constant-velocity joint 14 of the axle shaft 10 come into abutment against each other. When the nut 16 as the fastening member is fastened in abutment against the nut bearing surface 561 of the hub wheel 3, the vehicular outer end surface 14c of the constant-velocity joint 14 is forced to contact with the vehicular inner end surface 4a of the inner ring 4. The forced contact state (or the fastened state) is held by the nut 16 so that the axle shaft 10 is fixed axially immovably in the shaft hole 532 of the hub spindle 530.

According to the Embodiment 6, the hub is made of carbon steel, and is cold-forged to have the aforementioned hardness in the circumference of the bolt hole. On the other hand, the bolt is made of carbon steel, but is carburized and quenched to have a wear resistance. The hub acquires a Vickers hardness of Hv400 (at a measurement load of 300 g) or higher to give a sufficient wear resistance even at the time of changing the wheel or the like. Moreover, the press-fitting serrated portion is enabled, by adjusting its hardness, to bite reliably into the softer hub side bolt hole inner circumference, thereby to improve the press-fitting and fixing strength. If the hardness is given a hardness of an upper limit of Hv500 or less and if the serrated portion is more sunk than the taper, the excessive galling of the bolt hole inner circumference by the serrated portion can be suppressed to prevent the burr from being released to the chamfered portion, as might otherwise be caused by the galling.

The strength of the flange is insufficient, if the hardness is HRC18 or lower, and the press-fit of the bolt is difficult, if the hardness exceeds-HRC28. The serration is defeated, if the hardness is lower than Hv400, to become short of the press-fitting force, and the burr is released if the hardness is higher than 500.

In the hub unit of the invention, the opening circumferential edge portion of the bolt hole in the vehicular inner main surface can be radially enlarged at the inner side chamfered portion, and the axial width of the inner chamfered portion can be set larger than the axial width of the outer chamfered portion. This structure can easily prevent the falling of the burr.

In the hub unit of the invention, the depth (axial distance) of the vehicular outer end edge of the press-fitting and fixing serrated portion from the vehicular inner end edge of the outer chamfered portion to the vehicular inner side can be set to 0.5 mm or more and 6 mm or less. The burr release can be reliably prevented, if the depth of the outer chamfered portion is at least 0.5 mm or less.

For example, the double-row angular rolling bearing is adopted as the rolling bearing, but the invention can also be practiced even by using a double-row conical roller bearing. Further, needless to say, structures of the embodiments may be combined with one another.

## Claims

1. A rolling bearing device for a wheel, comprising:
- a hub wheel (20) including,
- a hub spindle (21) to be assembled with a rolling bearing (31),
- a flange (22, 422) formed on the hub spindle (21) in a circumferential direction thereof, the flange (22, 422) defining a vehicular outer main surface and a vehicle inner main surface, and
- a bolt hole (60, 160, 260, 460) formed through the flange (22, 422) in an axial direction thereof; and
- a hub bolt (70, 170, 270, 470) to be press-fitted in the bolt hole (60, 160, 260, 460) from the vehicular inner main surface to the vehicular outer main surface,
- wherein the hub bolt (70, 170, 270, 470) includes a bolt head (71, 171, 271, 471) to be abutted against the vehicular inner main surface at the time of press-fitting, a serrated portion (73, 173, 273, 473) to be press-fitted in the hub bolt (70, 170, 270, 470) and a threaded portion (77, 175, 275, 477), which are arranged in this order,
- wherein an outer chamfered portion (162, 262, 462) in which the bolt hole (60, 160, 260, 460) is radially enlarged toward the vehicular outer main surface is formed between the vehicular outer main surface and the bolt hole (60, 160, 260, 460),
- wherein an end edge of the serrated portion (73, 173, 273, 473) at a side of the threaded portion (77, 175, 275, 477) is axially positioned between an end edge of the outer chamfered portion (162, 262, 462) at a side of the bolt hole (60, 160, 260, 460) and the vehicular inner main surface,
- **characterized in that** a Rockwell hardness C-scale of steel material for forming a portion including an inner circumference of the bolt hole (60, 160, 260, 460) is set to HRC18 or higher and HRC28 or lower, and a Vickers hardness of steel material for forming a portion including a serrated portion (73, 173, 273, 473) is set to Hv400 or higher and Hv500 or lower.

2. The rolling bearing device according to claim 1, wherein
- an inner chamfered portion (61, 161, 261, 461) in which the bolt hole (60, 160, 260, 460) is radially enlarged toward the vehicular inner main surface is formed between the vehicular inner main surface and the bolt hole (60, 160, 260, 460), and
- an axial width of the inner chamfered portion (61, 161, 261, 461) is larger than an axial width of the outer chamfered portion (162, 262, 462).

3. The rolling bearing device according to claim 1 or 2, wherein an axial distance between the end edge of the serrated portion (73, 173, 273, 473) and the end edge of the outer chamfered portion (162, 262, 462) is 0.5 mm or more and 6 mm or less.

## Patentansprüche

1. Kugellager-Vorrichtung für ein Rad, aufweisend:
- eine Radnabe (20), umfassend
- eine Nabenwelle (21), die mit einem Kugellager (31) montiert wird,
- einen Flansch (22, 422), der auf der Radnabe (21) in deren Umfangsrichtung ausgebildet ist, wobei der Flansch (22, 422) eine fahrzeugäußere Hauptfläche und eine fahrzeuginnere Hauptfläche definiert, und
- ein Bolzenloch (60, 160, 260, 460), das durch den Flansch (22, 422) in dessen Axialrichtung ausgebildet ist; und
- einen Nabenbolzen (70, 170, 270, 470), der in das Bolzenloch (60, 160, 260, 460) von der fahrzeuginneren Hauptfläche zur fahrzeugäußeren Hauptfläche eingepresst wird,
- wobei der Nabenbolzen (70, 170, 270, 470) einen Bolzenkopf (71, 171, 271, 471) aufweist, der gegen die fahrzeuginnere Hauptfläche zum Zeitpunkt des Einpressens angestoßen wird, einen gezahnten Bereich (73, 173, 273, 473), der in den Nabenbolzen (70, 170, 270, 470) eingepresst wird, und einen Gewindebereich (77, 175, 275, 477) aufweist, die in dieser Reihenfolge angeordnet sind,
- wobei ein abgeschrägter Außenbereich (162, 262, 462), in welchem das Bolzenloch (60, 160, 260, 460) sich in Richtung zur fahrzeugäußeren Hauptfläche radial vergrößert, zwischen der fahrzeugäußeren Hauptfläche und dem Bolzenloch (60, 160, 260, 460) ausgebildet ist,
- wobei eine Kopfseite des gezahnten Bereichs (73, 173, 273, 473) auf einer Seite des Gewindebereichs (77, 175, 275, 477) axial zwischen einer Kopfseite des abgeschrägten Außenbereichs (162, 262, 462) auf einer Seite des Bolzenlochs (60, 160, 260, 460) und der fahrzeuginneren Hauptfläche positioniert ist,
- **dadurch gekennzeichnet, dass** eine Rockwell-C-Härte des Stahlwerkstoffs zum Ausbilden eines Bereichs, der einen Innenumfang des Bolzenlochs (60, 160, 26 0,460) umfasst, auf HRC18 oder höher und HRC28 oder niedriger festgelegt ist, und eine Vickershärte des Stahlwerkstoffs zum Ausbilden eines Bereichs, der einen gezahnten Bereich (73, 173, 273, 473) umfasst, auf Hv400 oder höher und Hv500 oder niedriger festgelegt ist.

2. Kugellager-Vorrichtung nach Anspruch 1, wobei
- ein abgeschrägter Innenbereich (61, 161, 261, 461), in welchem das Bolzenloch (60, 160, 260, 460) sich in Richtung zur fahrzeuginneren Hauptfläche radial vergrößert, zwischen der fahrzeuginneren Hauptfläche und dem Bolzenloch (60, 160, 260, 460) ausgebildet ist, und
- eine axiale Breite des abgeschrägten Innenbereichs (61, 161, 261, 461) größer als eine axiale Breite des abgeschrägten Außenbereichs (162, 262, 462) ist.

3. Kugellager nach Anspruch 1 oder 2, wobei ein axialer Abstand zwischen der Kopfseite des gezahnten Bereichs (73, 173, 273, 473) und der Kopfseite des abgeschrägten Außenbereichs (16 2,262, 462) 0,5 mm oder mehr und 6 mm oder weniger beträgt.

## Revendications

1. Dispositif formant palier à roulement pour une roue, comprenant :
un moyeu de roue (20) comportant,
un axe de moyeu (21) destiné à être assemblé avec un palier à roulement (31),
une bride (22, 422) formée sur l'axe de moyeu (21) dans une direction circonférentielle de celui-ci, la bride (22, 422) définissant une surface principale externe du véhicule et une surface principale interne de véhicule, et
un orifice de vis (60, 160, 260, 460) formé à travers la bride (22, 422) dans une direction axiale de celle-ci ; et
une vis de moyeu (70, 170, 270, 470) destinée à être assemblée à force dans l'orifice de vis (60, 160, 260, 460) à partir de la surface principale interne de véhicule vers la surface principale externe de véhicule,
dans lequel la vis de moyeu (70, 170, 270, 470) comporte une tête de vis (71, 171, 271, 471) à mettre en butée contre la surface principale interne du véhicule au moment de l'assemblage à force, une partie striée (73, 173, 273, 473) à assembler à force sur la vis de moyeu (70, 170, 270, 470) et une partie filetée (77, 175, 275, 477), qui sont agencées selon cet ordre,
dans lequel une partie chanfreinée externe (162, 262, 462) dans laquelle l'orifice de vis (60, 160, 260, 460) est radialement élargi vers la surface principale externe de véhicule est formée entre la surface principale externe de véhicule et l'orifice de vis (60, 160, 260, 460),
dans lequel un bord d'extrémité de la partie striée (73, 173, 273, 473) au niveau d'un côté de la partie filetée (77, 175, 275, 477) est positionné axialement entre un bord d'extrémité de la partie chanfreinée externe (162, 262, 462) d'un côté de l'orifice de vis (60, 160, 260, 460) et la surface principale interne de véhicule,
**caractérisé en ce qu'**une dureté Rockwell sur l'échelle C de matériau à base d'acier destiné à former une partie comportant une circonférence interne de l'orifice de vis (60,160, 260, 460) est définie à une valeur supérieure ou égale à HRC 18 et inférieure ou égale à HRC28, et une dureté Vickers de matériau à base de acier destiné à former une partie comportant une partie striée (73, 173, 273, 473) est définie à une valeur supérieure ou égale à Hv400 et inférieure ou égale à Hv500.

2. Dispositif formant palier à roulement selon la revendication 1, dans lequel :
une partie chanfreinée interne (61, 161, 261, 461) dans laquelle l'orifice de vis (60, 160, 260, 460) est élargi radialement vers la surface principale interne de véhicule est formée entre la surface principale interne de véhicule et l'orifice de vis (60, 160, 260.460), et
une largeur axiale de la partie chanfreinée interne (61, 161, 261, 461) est supérieure à une largeur axiale de la partie chanfreinée externe (162, 262, 462).

3. Dispositif formant palier à roulement selon la revendication 1 ou 2, dans lequel une distance axiale entre le bord d'extrémité de la partie striée (73, 173, 273, 473) et le bord d'extrémité de la partie chanfreinée externe (162, 262, 462) est supérieure ou égale à 0,5 mm et inférieure ou égale à 6 mm.
